# EUROPEAN PATENT APPLICATION

(11) **EP 2 378 437 A1**
(43) Date of publication of application: **19.10.2011**
(21) Application number: 11003214.1
(22) Date of filing: 15.04.2011
(51) Int. Cl.: G06F 17/30, G06Q 10/00, H04L 29/08

(54) **Data synchronization methods in communication systems**

(30) Priority: 15.04.2010 US 324303 P; 13.04.2011 US 86124
(71) Applicant: HTC Corporation, Taoyuan County 330 (TW)
(72) Inventor: Lee Po-Yen, Taoyuan City Taoyuan County 330 (TW); Yeh, Pai-Chang, Taoyuan City Taoyuan County 330 (TW); Chen, Chien-Wen, Taoyuan City Taoyuan County 330 (TW); Lian, Li-Wen, Taoyuan City Taoyuan County 330 (TW)
(74) Representative: Wagner & Geyer

(57) **Abstract**

A data synchronization method for synchronizing data in a communication system including an account server including a first data record of an account, a mobile device including a second data record, and a data server including a third data record is disclosed. The mobile device is connected to the account server and the data server. First, a first synchronization procedure is performed to synchronize data between the first data record of the account server and the second data record of the mobile device according to a first identification data. After the first synchronization procedure has been completed, a second synchronization procedure is performed to synchronize data between the synchronized second data record of the mobile device and the third data record of the data server according to the first identification data and a second identification data.

## Description

### CROSS REFERENCE TO RELATED APPLICATIONS

[0001] This Application claims priority of U.S. Provisional Application No. 61/324,303, filed on April 15, 2010, and the entirety of which is incorporated by reference herein.

### BACKGROUND OF THE INVENTION

### Field of the Invention

The invention relates to data synchronization in a communication system comprising a mobile device and a plurality of synchronization sources, and more particularly, to methods and apparatuses for synchronizing data among a synchronization source, a mobile device and a server to perform three-way synchronization so as to keep data in the mobile device consistent with all of the synchronized sources.

### Description of the Related Art

Recently, portable devices, such as mobile or handheld devices, have become more and more technically advanced and multifunctional. For example, a mobile device may receive email messages, have an advanced address book management application, allow media playback, and have various other functions. Because of the conveniences of devices with multiple functions, the devices have become necessities of life.

Generally, mobile devices may have storage of contact data for storing contact information of the mobile user. For example, a mobile device may have an address book with a plurality of contact data and a user may modify any one of the contact data by a user interface of the mobile device. In addition, the mobile device may be allowed to synchronize the contact data in the mobile device with contact data in a 3^{rd} party synchronization source, such as a Google^{™} mail server or Microsoft^{™} Exchange server. For example, users can activate a synchronization application to synchronize data between the mobile device and a 3rd party synchronization source, such as a Microsoft^{™} Exchange server, to copy/update data from the 3rd party synchronization source to the mobile device or from the mobile device to the 3rd party synchronization source.

Currently, a data server may also be provided to backup all of the phone data in the mobile device. The synchronization among the 3^{rd} part synchronization source, the mobile device, and the data server may be performed and may cause data inconsistencies when data conflict occurs. For example, the mobile device and the data server may simultaneously store a same record for a specific account of the 3^{rd} part synchronization source (e.g. a Google^{™} account) and a user may change data content of this record for the specific account via the 3^{rd} part synchronization source and the data server such that some data content of the same record for the specific account may be different among the 3^{rd} part synchronization source, the mobile device, and the data server. In such a case, the data in the 3^{rd} part synchronization source, the mobile device, and the data server are inconsistent so that the record for the specific account stored in the mobile device may be erroneously updated when the data are synchronized among the 3^{rd} part synchronization source, the mobile device, and the data server. Therefore, there is a need for data synchronization mechanisms capable of efficiently and correctly synchronizing data among the mobile device and all synchronization sources and handling data conflict thereof.

### BRIEF SUMMARY OF THE INVENTION

Data synchronization methods for synchronizing data in a communication system and communication systems are provided.

An embodiment of the invention provides a data synchronization method for synchronizing data in a communication system comprising an account server, a mobile device, and a data server. The mobile device is connected to the account server and the data server. The account server comprises a first data record of an account, the mobile device comprises a second data record, and the data server comprises a third data record. The method comprises the following steps. First, a first synchronization procedure is performed to synchronize data between the first data record of the account server and the second data record of the mobile device according to a first identification data. After the first synchronization procedure has been completed, a second synchronization procedure is performed to synchronize data between the synchronized second data record of the mobile device and the third data record of the data server according to the first identification data and a second identification data, wherein the first identification data represents a specific location where a data record of the second data record is stored and the second identification data represents a specific location where the data record is stored in the third data record.

Another embodiment of the invention provides a data synchronization method for synchronizing data in a communication system comprising a mobile device. The method comprises the steps of connecting the mobile device to an account server; wherein the account server comprises a first data record of an account and the mobile device comprises a second data record, performing a first synchronization procedure to synchronize data between the first data record of the account server and the second data record of the mobile device according to a first identification data, connecting the mobile device to an data server, wherein the data server comprises a third data record; and performing a second synchronization procedure to synchronize data between the synchronized second data record of the mobile device and the third data record of the data server according to the first identification data and a second identification data, wherein the first identification data represents a specific location where a data record of the second data record is stored and the second identification data represents a specific location where the data record is stored in the third data record.

An embodiment of the invention also provides a communication system, comprising an account server, a mobile device, and a data server. The account server comprises a first data record of an account. The mobile device is connected to the account server and comprises a second data record. The data server is connected to the mobile device and comprises a third data record, wherein the mobile device performs a first synchronization procedure to synchronize data between the first data record of the account server and the second data record of the mobile device according to a first identification data, and after the first synchronization procedure has been completed, performs a second synchronization procedure to synchronize data between the synchronized second data record of the mobile device and the third data record of the data server according to the first identification data and a second identification data, wherein the first identification data represents a specific location where a data record of the second data record is stored and the second identification data represents a specific location where the data record is stored in the third data record.

Another embodiment of the invention also provides a communication system, comprising a mobile device and a data server. The mobile device is connected to an account server, wherein the account server comprises a first data record and the mobile device comprises a second data record. The data server is connected to the mobile device, wherein the data server comprising a third data record, wherein the mobile device performs a first synchronization procedure to synchronize data between the first data record of the account server and the second data record of the mobile device according to a first identification data, and after the first synchronization procedure has been completed, performs a second synchronization procedure to synchronize data between the synchronized second data record of the mobile device and the third data record of the data server according to the first identification data and a second identification data, wherein the first identification data represents a specific location where a data record of the second data record is stored and the second identification data represents a specific location where the data record is stored in the third data record.

Data synchronization methods for synchronizing data in a communication system may take the form of a program code embodied in a tangible media. When the program code is loaded into and executed by a machine, the machine becomes an apparatus for practicing the disclosed method.

### BRIEF DESCRIPTION OF THE DRAWINGS

The invention can be more fully understood by reading the subsequent detailed description and examples with reference to the accompanying drawings, wherein:

Fig. 1 is a schematic diagram illustrating an embodiment of a communication system of the invention;

Fig. 2 is a flowchart illustrating an embodiment of a data synchronization method according to the invention;

Fig. 3A is a schematic diagram illustrating an embodiment of a second data record according to the invention;

Fig. 3B is a schematic diagram illustrating an embodiment of a third data record according to the invention;

Fig. 3C is a schematic diagram illustrating an example of synchronized data records according to the invention;

Fig. 4 is a schematic diagram illustrating an embodiment of an example of a data synchronization process of the invention;

Fig. 5 is a schematic diagram illustrating an embodiment of a delete tracking table;

Fig. 6 is a flowchart illustrating another embodiment of a data synchronization method according to the invention;

Fig. 7 is a flowchart illustrating another embodiment of a data synchronization method for handling a first case that the user signs up to the data server for the first time according to the invention; and

Fig. 8 is a flowchart illustrating another embodiment of a data synchronization method for handling a second case that the mobile device is a new mobile phone bought by the user for the first time according to the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

Methods for synchronizing data among a mobile device and a plurality of synchronization sources are provided. Embodiments of the invention provide methods for synchronizing data among a mobile device and a plurality of synchronization sources, such as account servers to be synchronized and a data server having a copy of the data stored in the mobile device, to make the data consistent when synchronization of data among a mobile device and a plurality of synchronization sources are required. By utilizing a specific synchronization sequence of all of the synchronization sources and related synchronization mechanisms of the present invention, the data can be consistent when data conflict occurs during synchronization, thus efficiently and correctly synchronizing data among the mobile device and all synchronization sources and handling data conflict thereof.

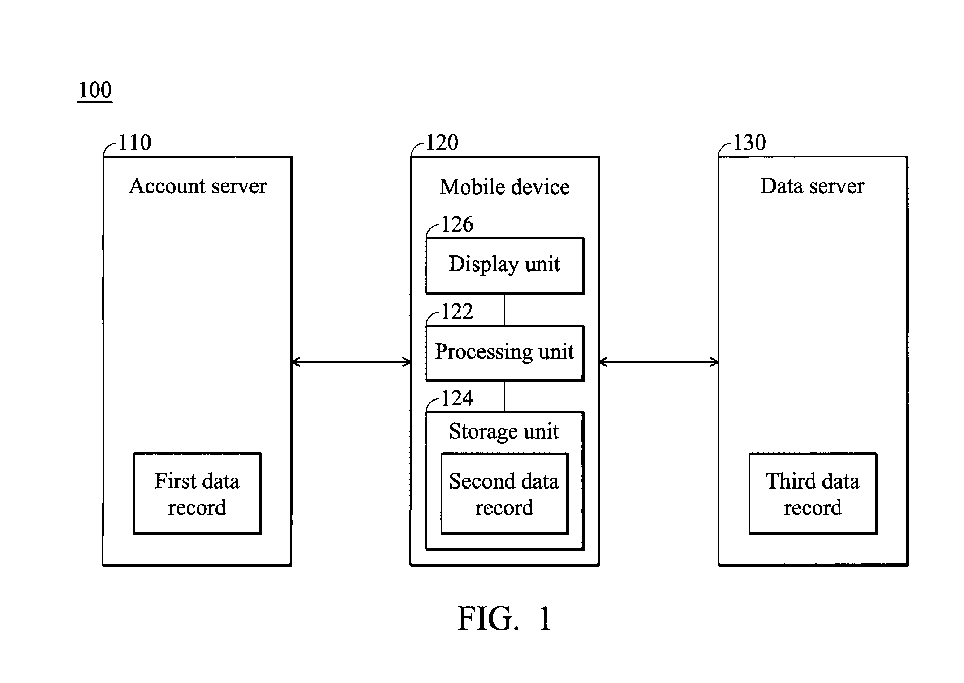

Fig. 1 is a schematic diagram illustrating an embodiment of a communication system of the invention. The communication system 100 at least comprises an account server 110, a mobile device 120, and a data server 130. The mobile device 120 may be connected to the account server 110 and the data server 130 via a wired/wireless network (e.g. Internet) connection. The mobile device 120 may be mobile and hand-held devices, such as a smart phone, a mobile phone, and the likes. A user of the mobile device 120 may have at least one respective account for accessing the account server 110 which may be any mail server, such as Google^{™} mail server, Microsoft Exchange server, and other synchronization sources, and the account server 110 may store a first data record corresponding to the respective account. For example, the user may have a Google^{™} account for accessing the Google^{™} mail server and the Google^{™} mail server may store a data record corresponding to this Google^{™} account. When the user is logged into the Google^{™} mail server using the Google^{™} account, the mobile device 120 is connected to the Google^{™} mail server and can access the data record corresponding to the Google^{™} account. It is noted that, the aforementioned account servers are examples of the present application, and the present invention is not limited thereto. The mobile device 120 may comprise a processing unit 122, a storage unit 124, and a display unit 126. The display unit 126 can display related data, such as user interfaces, contact data, and others. The storage unit 124 may be a built-in memory or an external memory card, which stores related data, and provides data to the display unit 126 for display. The storage unit 124 may comprise a data record that stores contact information. The data server 130 may also comprise a data record that is a backup of all of the contact information stored in the storage unit 124 of the mobile device 120. The mobile device 120 is capable of being connected to the account server 110, by using a respective account and the data server 130. When the mobile device 120 is connected to the account server 110 and the data server 130, the data synchronization method of the present invention can be performed.

The processing unit 122 can perform the data synchronization method of the present invention, which will be discussed further in the following paragraphs.

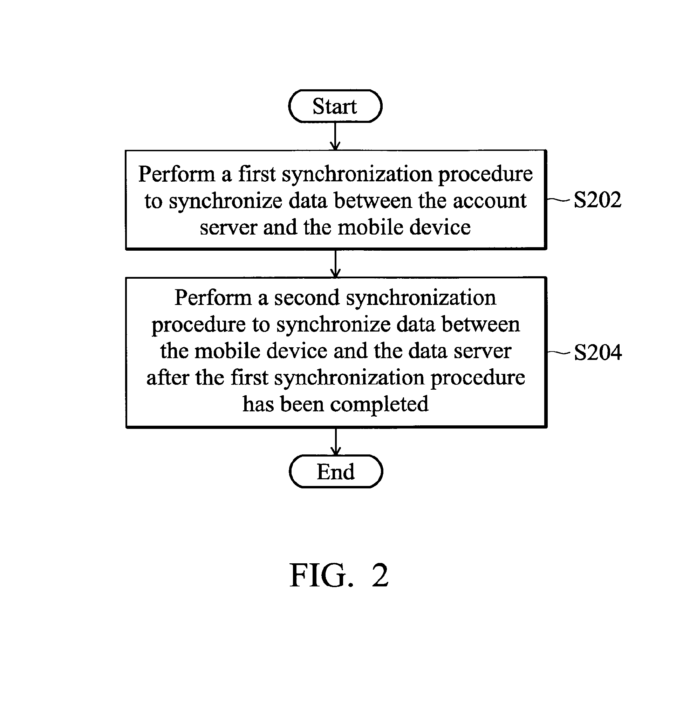

Fig. 2 is a flowchart illustrating an embodiment of a data synchronization method according to the invention. In this embodiment, it is assumed that the mobile device 120 is already connected to the account server 110 and the data server 130 via the respective network (not shown), wherein the mobile device 120 is connected to the account server 110 using a specific account. The account server 110 may be, for example, a mail server, a contact information server, a calendar service server, a on-line album server, a social network service server, but it is not limited thereto. The account server 110 comprises a first data record for the specific account, the storage unit 124 of the mobile device 120 comprises a second data record, which is related to the first data record, and the data server 130 comprises a third data record, which is also related to the second data record. In other words, the first, second, and third data records stored in the account server 110, the mobile device 120, and the data server 130 respectively are related to each other.

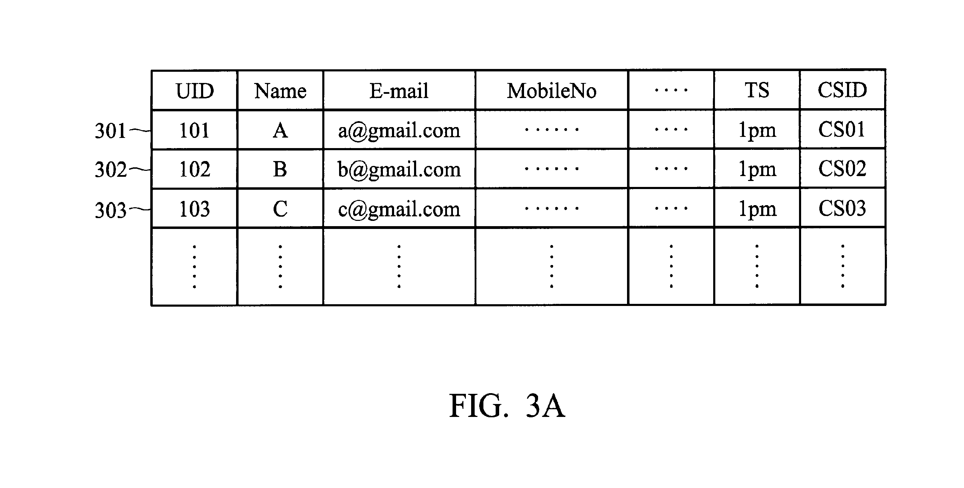

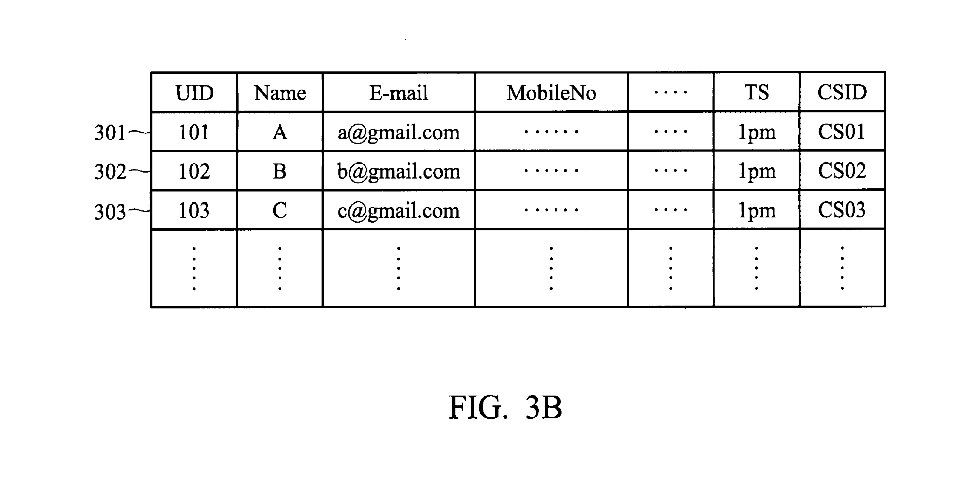

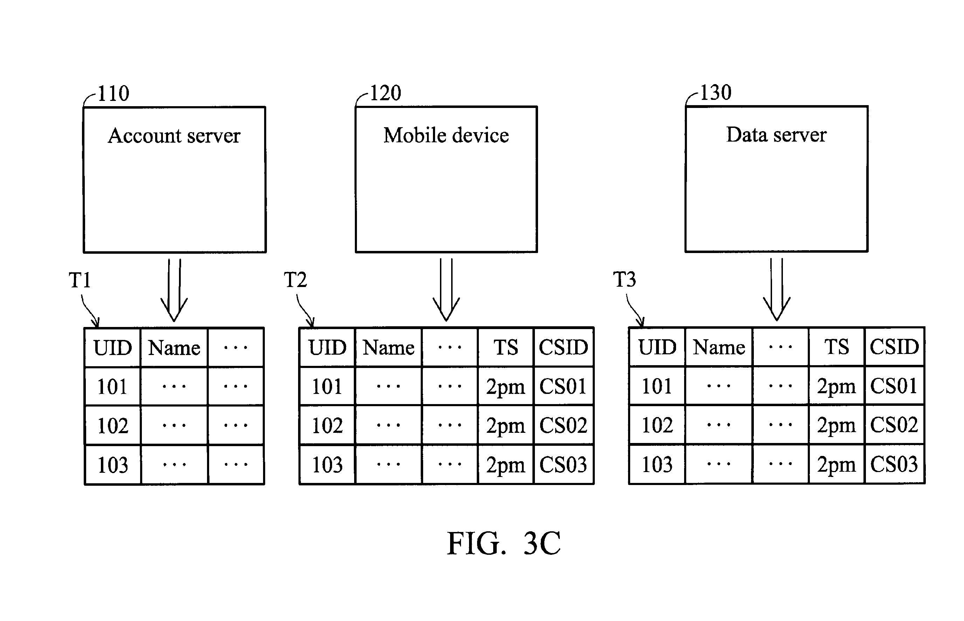

In step S202, the mobile device 120 receives a synchronization request and performs a first synchronization procedure to synchronize data between the account server 110 and the mobile device 120. For example, the mobile device 120 may retrieve the first data record from the account server 100, compare it with the second data record and update the data stored in the second data record according to the retrieved data record if data content of any record of the second data record is different from that of the respective record of the retrieved data record. It is understood that, in some embodiments, the first synchronization procedure may be performed based on a first identification (ID) data UID which represents a specific location where a data record of the second data record is stored. During the first synchronization procedure, data records of the retrieved data record and the second data record with a same first ID data UID are compared and updated accordingly if needed. Please refer to Figs. 3A and 3B. Fig. 3A is a schematic diagram illustrating an embodiment of a second data record according to the invention. Fig. 3B is a schematic diagram illustrating an embodiment of a third data record according to the invention. Referring to Fig. 3A, the second data record comprises fields regarding a first ID data (such as field UID), a timestamp (such as field TS) and a second ID data (such as field CSID), where the field TS represents a specific time when the data record has been updated, the field UID indicates a physical location for storing each record of the second data record in the storage unit 124 of the mobile device 120 and the field CSID indicates a physical location for storing each record of the third data record in the data server 130. The second data record further comprises a number of fields regarding user profile corresponding to an account, such as a Name field which indicates a user name of the account, an E-mail field which indicates an E-mail address corresponding to the user name, or the MobileNo field which indicates a mobile phone number corresponding to the user name. For example, as shown in Fig. 3A, the second data record comprises records 301, 302, and 303, wherein the fields UID, Name, E-mail, TS, and CSID of the record 301 are set to be "101", "A", "a@gmail.com", "1pm", and "CS01" respectively; the fields UID, Name, E-mail, TS, and CSID of the record 302 are set to be "102", "B", "b@gmail.com", "1pm", and "CS02" respectively; and the fields UID, Name, E-mail, TS, and CSID of the record 303 are set to be "103", "C", "c@gmail.com", "1pm", and "CS03" respectively. Note that the fields TS of the records 301, 302, and 303 are set to be "1pm", which indicates these records 301, 302, and 303 have already been updated at the time point "1pm". As the third data record will sync the records of the second data record, the third data record will comprise the records 301, 302, and 303 with the same data content as those in Fig. 3A, as shown in Fig. 3B. An example of the synchronized data for the first data record T1, the second data record T2, and the third data record T3 are shown in Fig. 3C.

It is understood that the data between the account server 110 and the mobile device 120 will be consistent after the first synchronization procedure has been successfully performed.

After the first synchronization procedure has been completed, in step S204, the mobile device 120 performs a second synchronization procedure to synchronize data between the mobile device 120 and the data server 130. For example, the data server 130 may retrieve the updated second data record from the mobile device 120, compare it with the data record stored in the third data record and update the data stored in the third data record according to the retrieved data record if data content of any record of the third data record is different form that of a respective record of the retrieved data record. It is understood that, in some embodiments, the second synchronization procedure may be performed based on the first ID data UID and the second ID data CSID which represents a specific location where a record of the third data record is stored. Each record of the third data record may have a unique second ID data CSID. During the second synchronization procedure, data records of the retrieved data record and the second data record with a same first ID data UID and a same second ID data CSID are compared and updated accordingly if needed.

It is understood that the data among the account server 110, the mobile device 120, and the data server 130 will be consistent after the second synchronization procedure has been successfully performed.

It is understood that, in some embodiments, each record is stored with a timestamp (such as field TS shown in Fig. 3A), and it may further be determined whether to update data in the data record and which data to be updated based on the corresponding timestamps. The timestamp of each record indicates a time point for which the respective record has been modified/updated. When a data conflict between two records occurs, the record with a first timestamp will be updated to that of the record with a second timestamp larger than the first timestamp. In other words, the latest updated data record which has the largest timestamp among all of the inconsistent records will be kept and serve as synchronization data to synchronize with other records when a data conflict occurs.

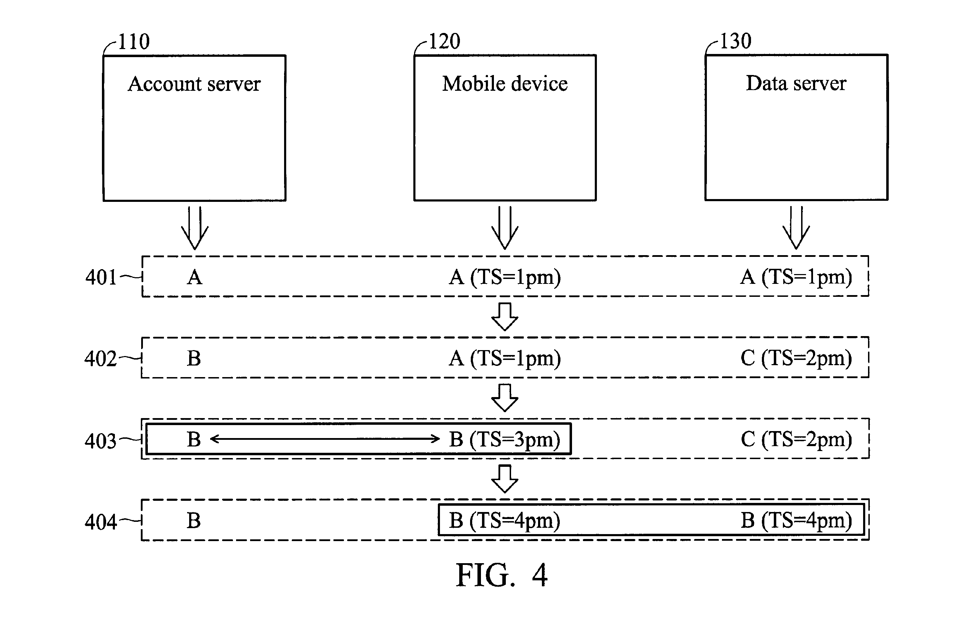

Referring to Fig. 4, Fig. 4 is a schematic diagram illustrating an embodiment of an example of a data synchronization process of the invention. It is to be noted that, in this embodiment, for illustration purpose, only a specific record is used as an example, but it is understood that the invention is not limited thereto. As shown in Fig. 4, step 401 represents that the data of the specific record among the account server 110, the mobile device 120, and the data server 130 are synchronized at time point "1pm" and the data content is denoted as "A" and the timestamp of the specific data record is denoted as "TS=1pm". Thereafter, at time point "2pm", the data content of the account server 110 and the data server 130 have been changed to be "B" and "C", respectively, as shown in step S402. In this case, as the data content are inconsistent among the account server 110, the mobile device 120, and the data server 130, data conflict occurs and thus data may be required to be re-synchronized. According to the data synchronization method of the present invention, the 3^{rd} party synchronization source (i.e. the account server 110) should always be synchronized first when there is data conflict. Thus, at time point "3pm", step 202 is performed to perform the first synchronization procedure to synchronize data between the account server 110 and the mobile device 120 so that the data content of the mobile device 120 is synchronized to that of the account server 110. Meanwhile, the data content of the specific record of the mobile device 120 is changed to "B" with a timestamp "TS=3pm", as shown in step S403. Then, at time point "4pm", step 204 is performed to perform the first synchronization procedure to synchronize data between the account server 110 and the mobile device 120 so that the data content of the mobile device 120 is synchronized to that of the account server 110. Meanwhile, the data content of the specific record of the mobile device 120 is changed to "B" with a timestamp "TS=3pm", as shown in step S403. Then, at time "4pm", step S204 is further performed to perform the second synchronization procedure to synchronize data between the mobile device 120 and the data server 130. Therefore, both the specific records of the mobile device 120 and the data server 130 are changed to data content "B" with a timestamp "TS=4pm", as shown in step S404.

The above synchronization procedures may be performed upon every predefined fixed time period or upon any updating of data in the account server 110, the mobile device 120, and/or the data server 130.

In some embodiments, the mobile device 120 may further comprise a synchronization manager unit (not shown) for sequentially performing synchronization procedures to synchronize all of registered accounts of one or more synchronization sources according to a predetermined synchronization sequence. In this embodiment, the synchronization manager unit may schedule the synchronization sequence of all of the registered accounts of the synchronization sources by assigning a priority for each registered account, and the synchronization manager unit may further assign the data server 130 with the lowest priority such that the data server 130 is lastly synchronized. For example, assume that a Google^{™} account, a Microsoft^{™} exchange account, and the data server 130 are to be synchronized, the synchronization manager unit would assign the data server 130 with the lowest priority such that data of the Google^{™} account and data of the Microsoft^{™} exchange account is synchronized prior to the data server 130. Therefore, data updated in the 3^{rd} party synchronization sources can be kept.

In some embodiments, when a record of an account has been deleted from the second data record of the mobile device 120, the deleted record may not be uploaded to the data server 130 so that the data server 130 may not know that the record has been deleted and may still maintain it in the third data record. Therefore, a delete tracking table is further provided to record deleted records and assist in data synchronization.

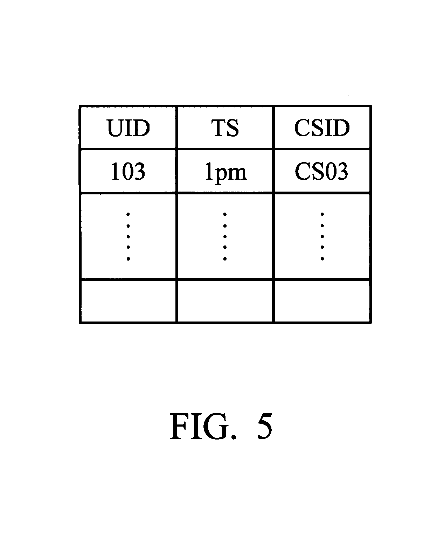

Fig. 5 is a schematic diagram illustrating an embodiment of a delete tracking table. Referring to Fig. 5, the delete tracking table comprises fields regarding a first ID data (such as fields UID), a timestamp (such as fields TS), and a second ID data (such as fields CSID), where the field TS represents a specific time when the data record has been updated, the field UID indicates a physical location storing the second data record in the storage unit 124 of the mobile device 120 and the field CSID indicates a physical location storing each record of the third data record in the data server 130. When any record has been deleted from the second data record of the mobile device 120, it is moved to the delete tracking table. Referring to Figs. 3A and 5, for a deleted record 303, only the first ID data (such as fields UID), the timestamp (such as fields TS), and the second ID data (such as fields CSID) of the deleted record will be recorded in the delete tracking table, thus saving storage space needed for maintaining the delete tracking table.

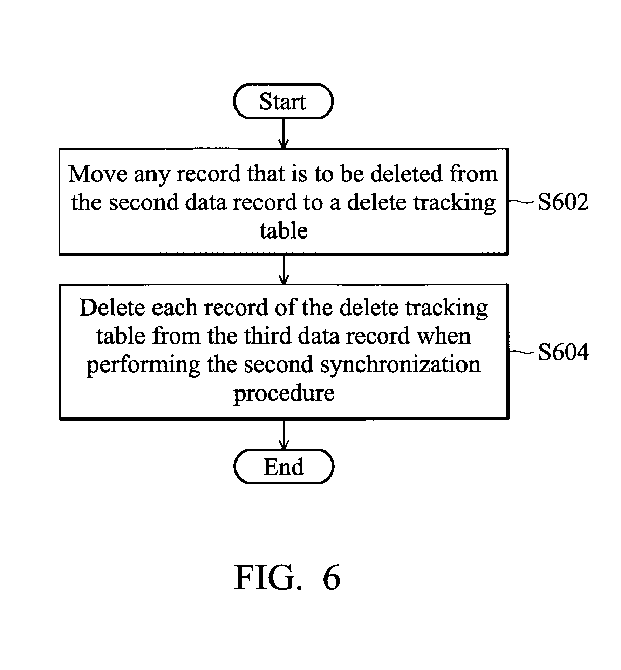

Fig. 6 is a flowchart illustrating another embodiment of a data synchronization method according to the invention. In step S602, if any record that is to be deleted from the second data record, it will be moved to the delete tracking table. Then, when performing the second synchronization procedure to synchronize data between the account server 110 and the mobile device 120, in step S604, each record of the delete tracking table will be deleted from the third data record. Upon the next synchronization procedure, the data server 130 may further retrieve the delete tracking table from the mobile device 120, check the records in the delete tracking table and delete all of the responsive records in the third data record according to the first ID data, the timestamp and the second ID data for each deleted record. For example, referring to Fig. 5, the deleted record 303 will also be removed from the third data record shown in Fig. 3B. Thus, the data between the mobile device 120 and the data server 130 can be consistent.

It is understood that, when the first synchronization procedure and the second synchronization procedures have been completed, the data among the account server 110, the mobile device 120, and the data server 130 should be consistent. In some embodiments, a value LastSync may be kept on the mobile device 120 and the data server 130 to indicate the time point that the data has been synchronized. In this case, the mobile device 120 may compare only records with the timestamps larger than the value LastSync to efficiently compare modified records in the second synchronization procedure. Moreover, the timestamps of all records would have to be updated with a new LastSync value after the second synchronization procedure has been completed. For example, in one embodiment, if the value LastSync is set to be 2pm and a timestamp of a fourth record is 3pm, only the data record with the timestamp larger than 2pm within the second data record (i.e. the fourth record) will be compared with the respective one in the third data record in the data server 130 and updated if the data is inconsistent. Thereafter, the new LastSync value is updated to 3pm and the timestamps of all records will be updated to 3pm.

It is understood that, in some embodiments, when the mobile device 120 is a new mobile phone bought by a user, the data server may already have a respective data record for the old mobile device 120 or the user may sign up to the data server 130 for the first time and thus, the data server 130 may not have any respective data record for the mobile device 120, or a "Reset to factory setting" operation may have to be performed on the same mobile device 120. Thus, a slow synchronization procedure should be further provided to handle data synchronization.

In a first case where a user signs up to the data server 130 for the first time, the mobile device 120 may first synchronize with the account server 110 after signing up to the account server 110 using a respective account.

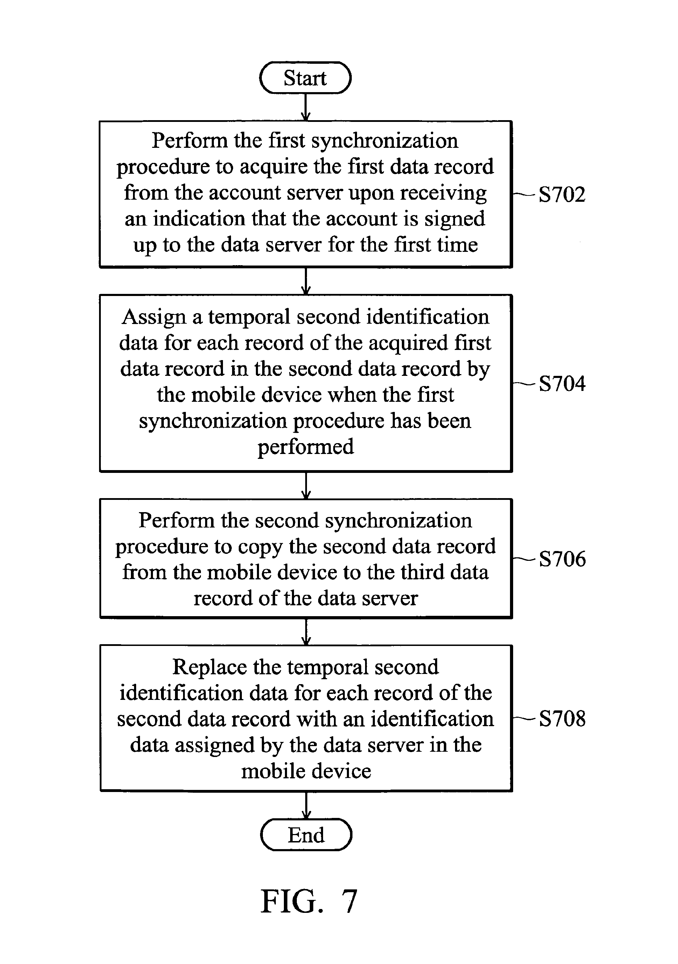

Fig. 7 is a flowchart illustrating another embodiment of a data synchronization method for handling a first case that the user signs up to the data server for the first time according to the invention. In this embodiment, the mobile device 120 may receive a "first sign up" case indication which indicates that this account is signed up to the data server for the first time and report the "first sign up" case to the data server 130. Upon receiving an indication that the account is signed up to the data server 130 for the first time, in step S702, the first synchronization procedure is performed by the mobile device 120 to acquire the first data record from the account server 110.

When the first synchronization procedure has been performed and the first data record has been acquired, in step S704, the mobile device 120 assigns a temporal second identification data for each record of the acquired first data record in the second data record. In this step, the mobile device 120 may sequentially compare each record within the second data record and the first data record and synchronize the data therebetween. After synchronization is completed, the mobile device 120 may assign the second ID data (i.e. CSID) for each record of the second data record with a temporal ID data CSID.

In step S706, the second synchronization procedure is then performed by the mobile device 120 and the data server 130 to copy the second data record from the mobile device to the third data record of the data server.

Then, in step S708, the temporal second identification data for each matched record of the second data record is replaced with an identification data assigned by the data server 130 in the mobile device 120. In this step, the mobile device 120 is further synchronized with the data server 130 such that the data server 130 may copy each record of the second data record in the third data record and assign a global ID data for each record to replace its temporal ID data. After the data server 130 has copied all of the newly added record from the second data record, the data server 130 may further synchronize with the mobile device 120 to overwrite the temporal ID data of each record of the second data record to the respective global ID data in the third data record.

In a second case where a mobile device 120 is a new mobile phone bought by the user and the data server already has a respective data record for the old mobile device 120 or a "Reset to factory setting" operation is to be performed on the same mobile device 120, the mobile device 120 may first synchronize with the account server 110.

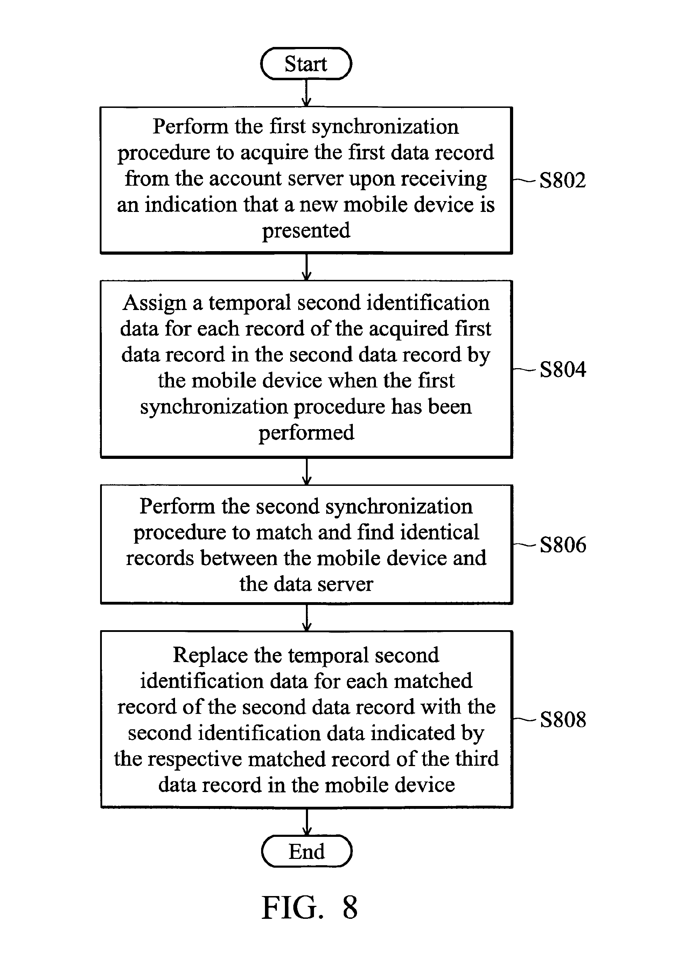

Fig. 8 is a flowchart illustrating another embodiment of a data synchronization method for handling a second case that the mobile device 120 is a new mobile phone bought by the user for the first time according to the invention.

It is to be noted that, although the data contents of the data record in the old mobile device may be the same as that in the new mobile device, the first ID data and the second ID data therebetween may be different after the mobile device 120 syncs with the account server 110. In this embodiment, the mobile device 120 may receive a "New Phone" case indication which indicates that a new mobile device is presented and report the "New Phone" indication to the data server 130. Upon receiving an indication that a new mobile device is presented, in step S802, the first synchronization procedure is performed by the mobile device 120 to acquire the first data record from the account server 110. When the first synchronization procedure has been performed and the first data record has been acquired, in step S804, the mobile device 120 assigns a temporal second identification data for each record of the acquired first data record in the second data record.

In step S806, the second synchronization procedure is then performed by the mobile device 120 and the data server 130 to match and find identical records between the mobile device 120 and the data server 130. In this step, the data server 130 may match and find identical records between the mobile device 120 and the data server 130, and assign a global ID data for each matched record to replace its temporal ID data. In some embodiments, the data server 130 may match and find identical records between the mobile device 120 and the data server 130 by, for example, comparing a number of fields in each record for quick matching, such as by comparing the Name field indicating a user name and the E-mail field indicating a E-mail address of the user name or the Name field and the MobileNo field indicating a mobile phone number of the user name, but the invention is not limited thereto.

Thereafter, in step S808, the temporal second identification data for each matched record of the second data record is replaced with the second identification data indicated by the respective matched record of the third data record in the mobile device 120. In this step, the data server 130 may further synchronize with the mobile device 120 to overwrite the temporal ID data of each record of the second data record with the respective global ID data in the third data record.

It is understood that, in some embodiments, the user may request to perform a "remove account" operation to remove a specific account from the second data record such that data records of the specific account will be deleted from the second data record. Similarly, the deleted records may not be uploaded to the data server 130 so that the data server 130 may not know that the records have been deleted and may still maintain them in the third data record. In one embodiment, as mentioned previously, the mobile device 120 may move the deleted records to the delete tracking table. Upon a next synchronization procedure, the data server 130 may further check the records in the delete tracking table and delete all of the responsive records in the third data record according to the first ID data, the timestamp and the second ID data for each deleted record. Thus, the data between the mobile device 120 and the data server can be consistent. In another embodiment, the mobile device 120 may delete all records of the specific account in the second data record and mark a "remove the specific account" indication to the data server 130. Upon a next synchronization procedure, the data server 130 may further delete all of the records corresponding to the specific account in the third data record according to the mark. For example, if a Google^{™} account is to be removed, the mobile device 120 may delete all records of the Google^{™} account in the second data record and mark a "remove the Google^{™} account" case to the data server 130 such that the data server 130 may then delete all of the records corresponding to the Google^{™} account in the third data record according to the mark. Thus, the data between the mobile device 120 and the data server can also be consistent.

It is understood that, in some embodiments, when the mobile device 120 has lost, the data kept in the data server 130 will still be maintained. Because the data kept in the data server 130 will not be immediately removed, a user can still edit and manage the data on web through the Internet before a new mobile device signs in. When the user signs into the same account using a new mobile device, data stored in the new mobile device and the third data record will be merged as the mentioned previously for the second case. If the Name/E-mail/MobileNo field has been changed, duplicate records may be generated in the third data record.

When the user signs in with different account using the new mobile device, the records may be set as read-only records to prevent the records from being deleted and may be automatically removed after a predetermined time period (e.g. 30 days) later. In some embodiments, the user may further be reminded, e.g. by an indication message showing in the display unit, to sign in the same account.

The described embodiments for data synchronization, or certain aspects or portions thereof, may be practiced in logic circuits, or may take the form of program codes (i.e., instructions) embodied in tangible media, such as floppy diskettes, CD-ROMS, hard drives, or any other machine-readable storage medium, wherein, when the program codes are loaded into and executed by a machine, such as a computer, a digital camera, a mobile phone, or similar, the machine becomes an apparatus for practicing the invention. The disclosed methods may also be embodied in the form of program codes transmitted over some transmission medium, such as electrical wiring or cabling, through fiber optics, or via any other form of transmission, wherein, when the program codes are received and loaded into and executed by a machine, the machine becomes an apparatus for practicing the invention. When implemented on a general-purpose processor, the program codes combine with the processor to provide a unique apparatus that operate analogously to specific logic circuits.

While the invention has been described by way of example and in terms of preferred embodiment, it is to be understood that the invention is not limited thereto. To the contrary, it is intended to cover various modifications and similar arrangements (as would be apparent to the skilled in the art). Therefore, the scope of the appended claims should be accorded to the broadest interpretation so as to encompass all such modifications and similar arrangements.

## Claims

1. A data synchronization method for synchronizing data in a communication system comprising an account server, a mobile device, and a data server, wherein the mobile device is connected to the account server and the data server, and the account server comprises a first data record of an account, the mobile device comprises a second data record, and the data server comprises a third data record, comprising:
performing a first synchronization procedure to synchronize data between the
first data record of the account server and the second data record of the mobile device according to a first identification data; and
after the first synchronization procedure has been completed, performing a
second synchronization procedure to synchronize data between the synchronized second data record of the mobile device and the third data record of the data server according to the first identification data and a second identification data,
wherein the first identification data represents a specific location where a data
record of the second data record is stored and the second identification data represents a specific location where the data record is stored in the third data record.

2. The data synchronization method of claim 1, further comprising:
providing a timestamp for each record of the second data record and the third
record; and
determining whether to synchronize one record of the second data record and a
respective record of the third data record according to the time stamps,
wherein the timestamp for each record indicates a time point for which the
record has been modified/updated.

3. The data synchronization method of claim 2, wherein the record of the second data record has a first timestamp and the respective record of the third data record has a second timestamp, and the method further comprises:
determining to synchronize the record of the second data record and the
respective record of the third data record when the first timestamp is not equal to the second timestamp; and
updating data in the respective record of the third data record with that of data
in the record of the second data record when the first timestamp is larger than the second timestamp.

4. The data synchronization method of claim 1, wherein a specific value is recorded in the mobile device and the data server after the second synchronization procedure has been completed and the method further comprises:
comparing and synchronizing only the records of the second data record
having timestamp exceeding the specific value with the respective records of the third data record.

5. The data synchronization method of claim 1, further comprising:
keeping the second data record stored in the third data record when the mobile
device has lost.

6. A data synchronization method for synchronizing data in a communication system comprising a mobile device, comprising:
connecting the mobile device to an account server; wherein the account server
comprises a first data record of an account and the mobile device comprises a second data record;
performing a first synchronization procedure to synchronize data between the
first data record of the account server and the second data record of the mobile device according to a first identification data;
connecting the mobile device to an data server; wherein the data server
comprises a third data record; and
performing a second synchronization procedure to synchronize data between
the synchronized second data record of the mobile device and the third data record of the data server according to the first identification data and a second identification data,
wherein the first identification data represents a specific location where a data
record of the second data record is stored and the second identification data represents a specific location where the data record is stored in the third data record.

7. A communication system, comprising:
an account server, comprising a first data record of an account;
a mobile device connected to the account server, comprising a second data
record; and
a data server connected to the mobile device, comprising a third data record,
wherein the mobile device performs a first synchronization procedure to
synchronize data between the first data record of the account server and the second data record of the mobile device according to a first identification data, and after the first synchronization procedure has been completed, performs a second synchronization procedure to synchronize data between the synchronized second data record of the mobile device and the third data record of the data server according to the first identification data and a second identification data, wherein the first identification data represents a specific location where a data record of the second data record is stored and the second identification data represents a specific location where the data record is stored in the third data record.

8. The communication system of claim 7, wherein a timestamp is provided for each record of the second data record and the third record and the mobile device further determines whether to synchronize one record of the second data record and a respective record of the third data record according to the time stamps, wherein the timestamp for each record indicates a time point for which the record has been modified/updated.

9. The communication system of claim 8, wherein the record of the second data record has a first timestamp and the respective record of the third data record has a second timestamp, and the mobile device further determines to synchronize the record of the second data record and the respective record of the third data record when the first timestamp is not equal to the second timestamp and updates data in the respective record of the third data record with that of data in the record of the second data record when the first timestamp is larger than the second timestamp.

10. The communication system of claim 7, wherein a specific value is recorded in the mobile device and the data server after the second synchronization procedure has been completed and the mobile device compares and synchronizes only the records of the second data record having timestamp data exceeding the specific value with the respective records of the third data record for a subsequent synchronization procedure.

11. The communication system of claim 7, wherein when removing a record from the second data record, the mobile device moves the record to a delete tracking table and the data server deletes each record of the delete tracking table from the third data record when performing the second synchronization procedure.

12. The communication system of claim 7, wherein the synchronization procedures are performed upon each predetermined time period or upon detection of the updating of data.

13. The communication system of claim 7, wherein upon receiving an indication that a new mobile device is presented, the mobile device performs the first synchronization procedure to acquire the first data record from the account server, assigns a temporal second identification data for each record of the acquired first data record in the second data record by the mobile device when the first synchronization procedure has been performed, performs the second synchronization procedure to match and find identical records between the mobile device and the data server, and replaces the temporal second identification data for each matched record of the second data record with the second identification data indicated by the respective matched record of the third data record in the mobile device.

14. The communication system of claim 7, wherein upon receiving an indication that the account has signed on to the data server for the first time, the mobile device performs the first synchronization procedure to acquire the first data record from the account server, assigns a temporal second identification data for each record of the acquired first data record in the second data record by the mobile device when the first synchronization procedure has been performed, performs the second synchronization procedure to copy the second data record from the mobile device to the third data record of the data server, and replaces the temporal second identification data for each record of the second data record with an identification data assigned by the data server in the mobile device.

15. A communication system, comprising:
a mobile device for connecting to an account server, wherein the account
server comprising a first data record and the mobile device comprising a second data record; and
a data server for connecting to the mobile device, wherein the data server
comprising a third data record,
wherein the mobile device performs a first synchronization procedure to
synchronize data between the first data record of the account server and the second data record of the mobile device according to a first identification data, and after the first synchronization procedure has been completed, performs a second synchronization procedure to synchronize data between the synchronized second data record of the mobile device and the third data record of the data server according to the first identification data and a second identification data, wherein the first identification data represents a specific location where a data record of the second data record is stored and the second identification data represents a specific location where the data record is stored in the third data record.
